# EUROPEAN PATENT SPECIFICATION

(11) **EP 0 302 740 B1**
(45) Date of publication and mention of the grant of the patent: **10.05.1995**
(21) Application number: 88307249.8
(22) Date of filing: 05.08.1988
(51) Int. Cl.: G03B 11/04

(54) **Lens caps**
Objektivkappe
Couvercle d'objectif

(30) Priority: 06.08.1987 JP 197210/87
(43) Date of publication of application: 08.02.1989
(73) Proprietor: SONY CORPORATION, Tokyo 141 (JP)
(72) Inventor: Anzai, Tsutomu c/o Patents Division, Shinagawa-ku Tokyo 141 (JP); Isobe, Akira c/o Patents Division, Shinagawa-ku Tokyo 141 (JP)
(74) Representative: Cotter, Ivan John

(56) References cited:
- DE-A- 2 208 526
- US-A- 3 682 055
- PATENT ABSTRACTS OF JAPAN, vol. 11, no. 110 (E-496)[2557], 7th April 1987 ; & JP-A-61 257 083
- PATENT ABSTRACTS OF JAPAN, vol. 9, no. 248 (E-347)[1971], 4th October 1985 ; & JP-A-60 096 967

## Description

This invention relates to lens caps. More particularly, but not exclusively, the invention relates to lens caps for video cameras.

There is often a need to edit a video tape such that a part of a series of images photographed by means of a video camera is deleted, or such that an image recorded on another magnetic tape is inserted between intermediate portions of the series of images. When such an editing operation as described above is carried out, there may be a requirement to insert an image - constituted by title characters making up a title, characters for a cut-in, or picture(s) (hereinafter referred to as a title element) - into the series of images (hereinafter referred to as a title picture).

Recently, a video camera in which a so-called title superimpose function is provided has been developed. The video camera is provided with a memory for storing at least one still image photographed using a photographic lens, and means for outputting the still image stored in the memory to an image recording portion. Prior to video photography, a still title picture, comprising a title element written on paper, etc., is photographed and stored in the memory. The title element can then be superimposed and recorded on the image of an object photographed during video photography.

There are several methods of photographing such a title.

For example, a paper on which the title element is written may be hung on a wall or hung and supported on a person, and the title element then photographed. When a title is photographed in this way, there are limits on the location that can be used for photographing the title. Also, discreet and careful photography is required to prevent camera fluctuations or photographed object fluctuations adversely effecting the image.

In addition, special auxiliary instruments for use exclusively for photographing title elements are provided on some video cameras. One such special auxiliary instrument includes an arm having a base end from which a screw extends and a tip or free end from which an integrated supporting piece extends vertically, and a screen frame on which a paper on which the title element is to be written (hereinafter referred to as a title recording paper) can be removably mounted. The title recording paper is located in front of a photographic lens of the camera when the mounting screw is threaded into a tapped hole (intended for mounting a tripod) provided on the lower surface of a housing or frame of the camera and when the title recording paper is mounted in the screen frame.

When a title is photographed using the special auxiliary instrument, the positional relationship between the title recording paper to be photographed and the video camera is fixed. Therefore, fluctuations of the video camera and consequent fluctuations of the photographed object on the image do not occur. However, the cost of photographing the title becomes increased due to the installation of the special auxiliary instrument. Further, it is inconvenient to have to mount the special auxiliary instrument on the camera. In addition, when the title is to be photographed at an exterior location, the special auxiliary instrument has to be carried and mounted on the video camera. Therefore, the handling of the auxiliary instrument is inconvenient.

Photographic lenses available on the market include so-called macro lenses or zoom lenses capable of photographing an object at a close distance. Many video cameras are provided with a zoom lens as a standard feature, or have the capability of using a special lens, capable of photographing an object at a close distance, which is provided as one of a plurality of exchangeable lenses. Such a macrolens or zoom lens can, in general, be focussed even if the photographic distance, i.e. the distance from the camera to the object being photographed, is several centimetres or less.

Patent Specification JP-A-61-257083 (Japanese Abstracts Vol. 11 No 110 (E-496) (2557)) discloses a lens cover with an aperture therein and spaced bobbins between which transparent paper can be stretched so as to extend over the aperture, titles can be written on the transparent paper and photographed by a camera, on which the lens cover is mounted, set to macro mode. The titles can be advanced by rotating one of the bobbins.

Patent Specification JP-A-60-96967 (Japanese Patent Abstract Vol. 9 No 248 (E 347) (1971)) discloses a lens cap with a milk coloured diffusion board and a portion with a slit provided between a lens of a camera on which the lens cap is mounted and the diffusion board, which slit can receive a title to be photographed by the camera. The specification also shows a device to be mounted on a camera body and to mount a frame at a position spaced from the front of a lens of the camera, the frame receiving a title sheet as described above.

According to the invention there is provided a lens cap comprising a lens cap body capable of removably covering a tip or end portion of a photographic lens which is capable of photographing an object in a macro mode, on which lens cap body a title recording medium made of a transparent or translucent material, on which a title is or can be marked, can be removably mounted, characterised by:
a plurality of positioning projections on the lens cap body between which the title recording medium can be mounted to position the title recording medium on a main part of the lens cap body, and a press plate made of a transparent material to hold the title recording medium removably against the main part of the lens cap body so that it can be photographed through the lens.

The invention will now be further described, by way of illustrative and non-limiting example, with reference to the accompanying drawings, in which:
Figure 1 is a partially cut way side view of a video camera to which a lens cap of previously proposed kind can be fitted;
Figure 2 is an enlarged perspective view of the video camera and lens cap shown in Figure 1;
Figure 3 is an enlarged front view of the lens cap, showing the lens cap mounting a title recording paper;
Figure 4(A) and 4(B) are enlarged perspective views of the lens cap and the title recording paper, respectively;
Figure 5 is a perspective view of a lens cap according to a first embodiment of the invention;
Figure 6 is a rear view of the lens cap shown in Figure 5;
Figure 7 is a cross-sectional view of the lens cap of Figures 5 and 6 taken along a line VII-VII in Figure 6;
Figure 8 is an exploded perspective view of a lens cap according to a second embodiment of the invention;
Figure 9 is a rear view of the lens cap shown in Figure 8; and
Figure 10 is a cross-sectional view of the lens cap of Figures 8 and 9 taken along a line X-X in Figure 9.

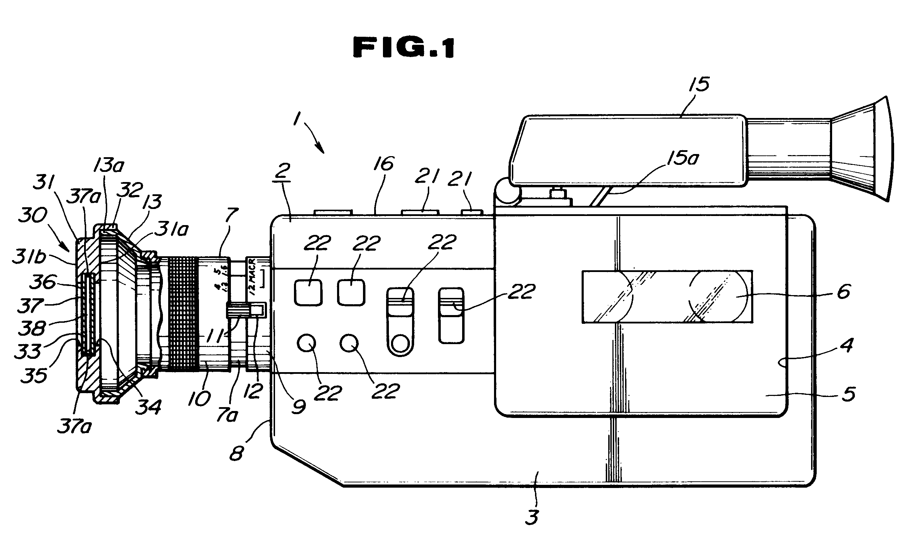

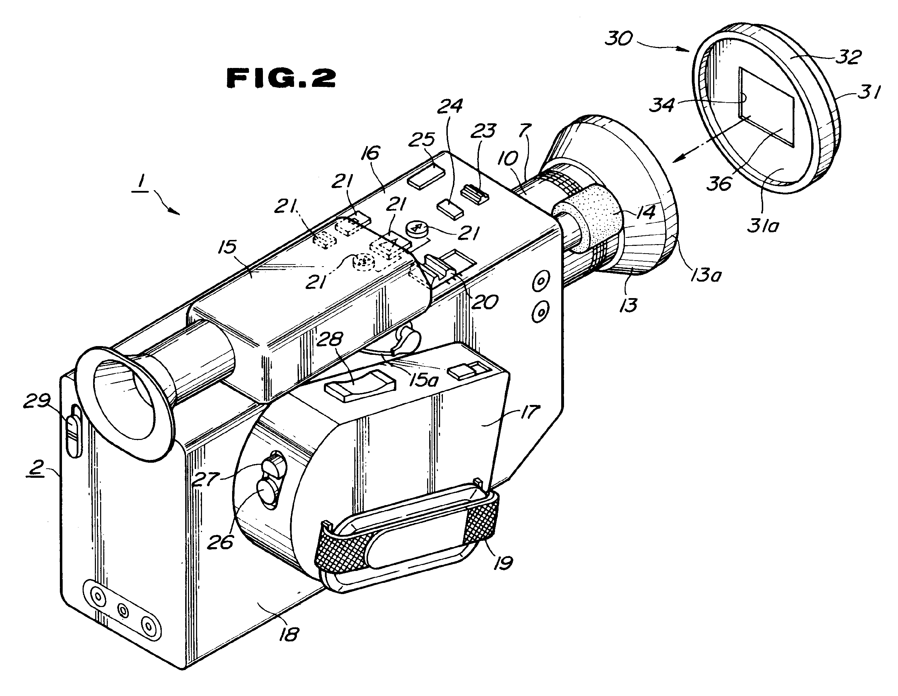

As shown in Figures 1 and 2, a video camera 1 includes a housing 2. A rear part of a left side surface 3 (not shown in Figure 2) of the camera housing 2 is formed with a cassette opening 4 for removing a cassette from or inserting a cassette into the housing 2. A lid 5 is mounted for pivotal movement to open or close the cassette opening 4. A cassette holder (not shown), in which a tape cassette 6 is removably mounted, is provided on the inner surface of the lid 5. With the tape cassette 6 inserted in the cassette holder, the lid 5 is moved to the position in which the cassette opening 4 is closed, so that the tape cassette 6 is mounted in a recording and playback portion in the housing 2.

A photographic lens 7 projects forwardly from a front surface 8 of the housing 2. The lens 7 includes a lens mirror envelope 7a in which a plurality of fixed and movable lenses are installed. A zooming ring 9 and a focussing ring 10 are rotatably fitted to the outside of the lens mirror envelope 7a for moving a predetermined one of the movable lenses in a predetermined range, in the direction of an optical axis, when rotated. An operation knob 11 and a lock release button 12 are provided on the zooming ring 9.

When the zooming ring 9 is rotated, a variator lens is moved so that a picture angle for an object being photographed by the photographic lens 7 is changed. A focussing lens is moved and focussed together with rotation of the focussing ring 10. When the lock release button 12 is pressed, the zooming ring 9 can be rotated further within a given range in the anticlockwise direction as viewed from the front surface of the video camera 1. When the zooming ring 9 is rotated within the above-described range (hereinafter also referred to as the macrofocus range), the photographic lens 7 functions as a macrolens capable of photographing a close object, i.e. an object at a short distance away from the lens. Photographing of an object at a distance of up to about 6 millimetres can be carried out.

A lens hood 13 is removably threaded on a front end portion of the focussing ring 10.

The camera 1 further comprises a microphone 14, an electronic view finder (EVF) 15 supported on a rear part of an upper surface 16 of the housing 2, a connector 15a for connecting the EVF 15 to a circuit installed in the housing 2, a battery mounting portion 17 projecting from a right side surface 18 of the housing 2, and a grip belt 19.

A mode selection button 20, for selecting different functional modes of the camera 1, is installed on the upper surface 16 of the housing 2. The button 20 has a total of three positions, i.e. a first position in which the camera is put into a photography or camera mode,a second position in which the camera is put into a playback mode, and a third position which selects an off mode in which neither the camera mode nor the playback mode function is carried out.

The camera has operating buttons 21 operable in the playback mode of the camera, e.g. a playback button, a tape forward button, a tape rewind button, a stop button, and a pause button; and operating buttons 22 operable during the photography or camera mode, e.g. a nauto/manual switching button for white balance adjustment, a nauto/manual switching button for focussing, a focussing button, and an inverse light correction button.

Further, the camera 1 has operating buttons 23, 24 and 25 for photographing and storing a title, namely a read button 23 for reading a title, a colour selection button 24 for selecting a colour for the title, and an on/off button 25 for storing a read title or for outputting a title stored in memory to an image recording circuit.

A photography button 26 is disposed on a rear end portion of the battery mounting portion 17. The video camera 1 starts to effect photography when the photography button 26 is pressed.

A standby button 27 is movable between a non-standby position and a standby position. The non-standby position is immediately above the photography button 26 and the standby position is more remotely above the photography button 26. In the standby position, the video camera 1 can carry out photography or can read a title.

The camera 1 further comprises an electric-powered zoom button 28 and a cassette removal button 29.

When the mode selection button 20 is moved to the photography (camera) mode selection position and the standby button 27 is moved to the standby position, the video camera 1 is put in the photography (camera) mode, in which an image of an object captured by the lens 7 is displayed on a screen of the EVF 15.

When the photography button 26 is depressed, an image captured by the lens 7 and audio (e.g. a voice) captured by the microphone 14 are recorded by a record/playback portion (not shown) on a magnetic tape of the tape cassette 6.

Zooming during photography is carried out in response to operation of the electric-powered zooming button 28 or in response to manual rotation of the zooming ring 9. Focussing is carried out automatically or manually.

Photographing a close object (an object at a short distance) is carried out with the lock release button 12 depressed to enable the zooming lens 9 to rotate within the macrofocus range.

If the lens hood 13 interferes with or disturbs the photographing of a close object (an object at a short distance), the lens hood 13 may be removed.

A title is stored as follows.

With the standby button 27 moved to the standby position and the photographic lens 7 directed at a title recording paper, the photograph lens 7 is focussed, the operator viewing the image displayed on the EVF 15. The read button 23 is then depressed so that the image of the title element is converted into an electrical signal and temporarily stored in a memory in a record/playback circuit of the video camera 1.

Next, when the colour selection button 24 is depressed, special abbreviated letters respectively representing a plurality of predetermined colours are displayed on the screen of the EVF 15. Whenever the button 24 is depressed, the display of the abbreviated letters is switched. When a representation of a desired colour is displayed, the on/off button 25 is depressed to select this colour. At this time, the signal indicative of the selected colour and the signal indicative of the title temporarily stored in the memory are stored in a memory and the image displayed on the screen of the EVF 15 disappears. The title thereby stored when the on/off button 25 is depressed is superposed on the image of the object to be photographed and recorded on the magnetic tape when the photography button 26 is depressed to start photography.

A lens cap 30 removably covers the photographic lens 7 of the video camera 1 via the lens hood 13, chiefly for protecting the lens 7.

The lens cap 30 includes a main part 31 which is disc-shaped and has a diameter slightly larger than that of a leading or free end 13a of the lens hood 13, and a fitting portion 32 which has circular ringshape and projects away from an outer peripheral edge of the main part 31 towards the video camera 1, as shown in Figure 2, the parts 31 and 32 being formed integrally of a synthetic resin.

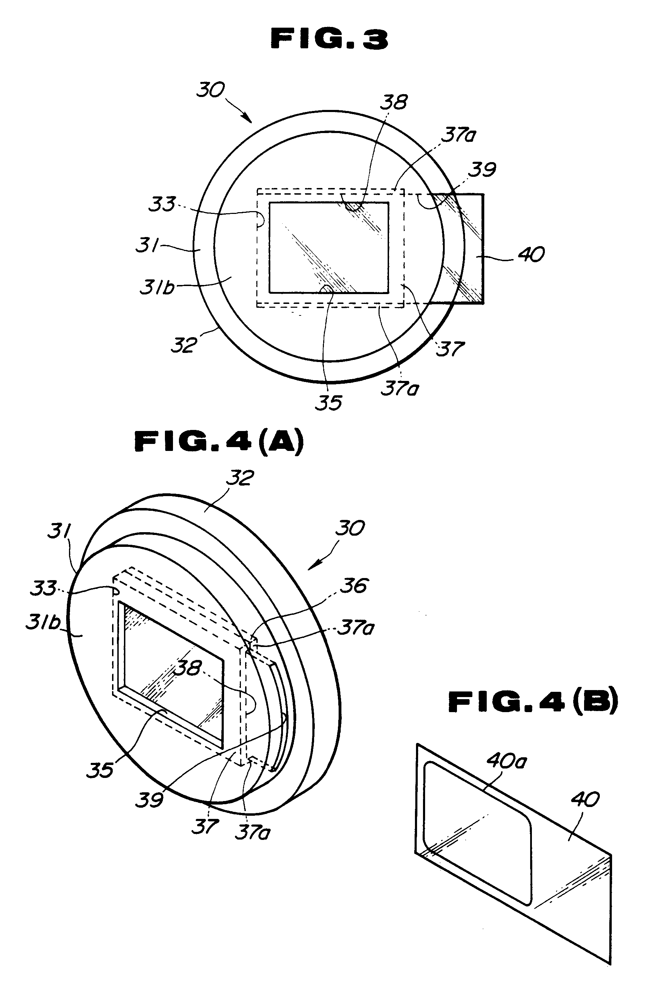

A substantially rectangular space 33, Figures 3 and 4, is formed within the main part 31 at a substantially central portion of the main part 31 as viewed in the direction of the thickness of the main part 31. In addition, windows (apertures) 34 and 35 are formed between an inner surface 31a (the surface nearer the video camera 1) of the main part 31 and the space 33, and between an outer surface 31b of the main part 31 and the space 33, respectively, the windows 34 and 35 each having a rectangular shape about one half smaller than the space 33.

The lens cap 30 further comprises light transmissive screens 36 and 37 formed of transparent or semitransparent synthetic resins, such as those of a milky white nature. The screens 36 and 37 each have a thickness substantially equal to one-third of the width or thickness of the space 33, i.e. the dimension thereof in the direction of the thickness of the main part 31. Projections 37a, 37a are formed at side edge portions of and extend along the longitudinal direction of the side of the screen 37 facing the screen 36. The screens 36 and 37 are spaced from and confront one another in the direction of their thickness and are housed and supported within the space 33 with a gap between them being maintained by means of the projections 37a, 37a. Thus, a narrow rectangular space 38 (hereinafter referred to as the title inserting portion), which is substantially twice as large as the windows 34 and 35, is formed between the two sheet-like screens 36 and 37.

An introduction (entry) slit 39 is formed in the longitudinal direction between one end of the title inserting portion 38 and the outer peripheral surface of the main part 31. The light transmissive screen 36 is transparent and the light transmissive screen 37 is transparent or semitransparent.

The lens cap 30 can serve to assist photographing of a title, in addition serving to protect the photographic lens 7. That is to say, the lens cap 30, as shown in Figure 1, has its fitting portion 32 fitted to the outside of the leading end portion 13a of the lens hood 13 of the video camera 1 so as to enclose the photographic lens 7 via the lens hood 13. Thus, the lens 7 can be protected. In addition, a title recording paper can be attached to the lens hood 13, the paper being inserted in the title inserting portion 38. If this is done, the photographing of a title can be carried out extremely easily.

Referring to Figure 4(B), the title recording paper 40 is made of a transparent or translucent paper or film of a synthetic resin. The recording paper 40 has substantially the same width as that of the title inserting portion 38 and is substantially rectangular, having a length substantially equal to 1.5 times the length of the title inserting portion 38. As shown in Figure 4(B), a frame 40a having a size substantially the same as that of each window 34 and 35 is provided at a part of the paper 40 offset towards one end in the longitudinal direction. An arbitrary title element is marked (described) in the frame 40a. The arbitrary title element is marked by means of ink, relatively thick in colour, within the frame 40a of the paper 40. The paper 40 is inserted into the title inserting portion 38 of the lens cap 30, through the introduction slit 39, as shown in Figure 3. At this time, with the lens cap 30 attached to the lens hood 13 and the standby button 27 placed in the standby position, the photographic lens 7 traps the title element marked on the title recording paper 40 and its image is displayed on the screen of the EVF 15.

Focussing of the lens on the object, i.e. the title recording paper 40, is carried out by turning the zooming ring 9 within the adjustment range for macrophotography, i.e. the macrofocus range.

If the read button 23 is then depressed, the title element marked (described) on the title recording paper 40 is temporarily stored in the memory. Therefore, when, as described above, upon completion of the colour selection operation effected by using the colour selection button 24, the on/off switch 25 is depressed, the title element is put into memory.

It should be noted that it is possible to mark the title element directly, by means of an aqueous pen, on the inner light transmissive screen 36, without using the title recording paper 40.

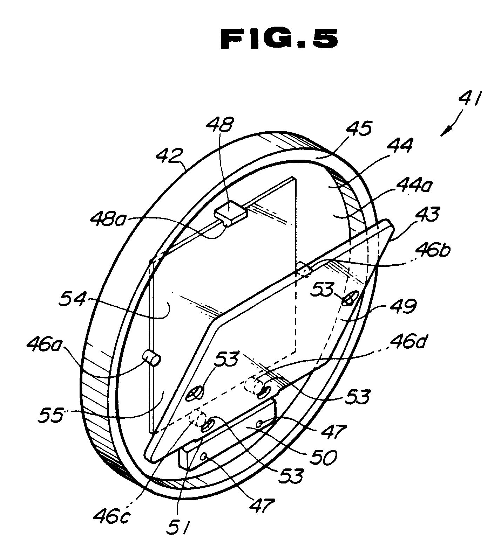

Figures 5 to 7 show a lens cap 41 according to a first embodiment of the invention which can replace the lens cap 30 of Figures 1 to 4(B).

The lens cap 41 includes a cap main body 42 formed of a semitransparent synthetic resin and a paper press 43 which is made of a transparent synthetic resin and is pivotally supported on the cap main body 42.

The cap main body 42 includes a main part 44 which is disc-shaped and has a diameter slightly larger than the diameter of the leading or free end 13a of the lens hood 13, and an integral fitting portion 45 which has a circular ring shape and which projects integrally from the outer peripheral edge portion of the main body 42 in the direction towards the video camera 1.

Four positioning projections 46a, 46b, 46c, and 46d, two supporting projections 47 and 47, and a supporting projection 48 extend from an inner surface 44a of the main part 44. Two (46a and 46b) of the four positioning projections 46a, 46b, 46c and 46d are mounted at positions near opposite ends of a centre portion of the main body part 44. The other two positioning projections (46c and 46d) are spaced apart from each other, towards the left and right, respectively, at a position near the bottom of the main body part 44. The two supporting projections 47 and 47 are spaced apart from each other, towards the left and right, respectively, below the positioning projections 46c and 46d, and the engagement projection 48 is disposed at an upper central position on the main body part 44. The leading or free end of the engagement projection 48 is formed with an engagement portion 48a that projects towards the supporting projections 47 and 47.

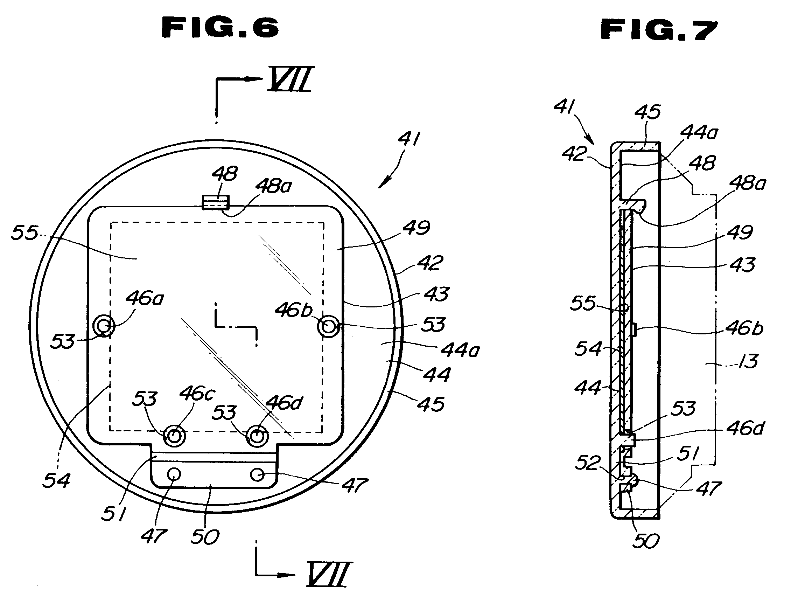

The paper press 43 includes a press plate 49 of a substantially square shape slightly smaller than a square inscribing the inner peripheral surface of the fitting portion 45 of the cap main body 42, and a projecting piece 50 that projects downwardly from a central portion of the lower edge of the press plate 49, the plate 49 and projecting piece 50 being formed integrally. A thin hinge portion 51 is formed at a position adjacent the press plate 49 and the projecting piece 50. Mounting holes 52, 52 (only one of which is shown in Figure 7) are formed towards the left and right ends, respectively, of a lower edge of the projecting piece 50.

The supporting projections 47 and 47 extending from the cap main body 42 are inserted through the mounting holes 52 and 52 of the paper press 43 and parts of the projections are fixed to the inner surface 44a of the main part 44 of the cap main body 42 by means of a hot staking or cold staking operation.

Hence, the paper press 43 is supported on the cap main body 42 in a state in which the press plate 49 can be moved to make contact with or be separated from the inner surface 44a of the main part 44 of the main body 42, with the hinge portion 51 of the paper press 43 acting as a pivoting fulcrum to enable the movement of the press plate.

It is to be noted that in the position of the press plate 49 of the paper press 43 in which the press plate 49 overlaps with the main part 44 of the cap main body 42 (hereinafter referred to as the paper press position), the positioning projections 46a to 46d are inserted into positioning holes 53 so that the press plate 49 can be located. The positioning holes 53 are formed at positions facing towards respective ones of the positioning projections 46a, 46b, 46c, and 46d and have larger diameters than the projections 46a, 46b, 46c and 46d.

When the press plate 49 is disposed in the paper press position, its pivoting end edge is engaged with the engagement portion 48a of the engagement projection 48 of the main body 42.

The lens cap 41 uses a title recording paper 54 made of the same material as the title recording paper 40 used in the lens cap of Figures 3 and 4. The title recording paper 54 is formed in a rectangular shape which is substantially smaller than the press plate 49 of the paper press 43.

To mount the title recording paper 54 on the lens cap 41, the press plate 49 of the paper press 43 is pivoted so that the press plate 49 is separated from the main part 44 of the cap main body 42 to some degree. The title recording paper 54 is placed within a region 55 enclosed within the positioning projections 46a to 46d and the engagement projection 48. The paper press 49 is then moved to the paper press position. Thus, the title recording paper 54 is held sandwiched between the main part 44 of the cap main body 42 and the press plate 49 of the paper press 43.

If, with the press plate 49 disposed in the paper press position and spaced apart from the main part 44, the tip or free end portion of the engagement projection 48 mounted on the main part 44 is forced to flex in the upward direction, the edge of the pivoting end of the press plate 49 may be grasped by a fingertip and pulled towards the operator.

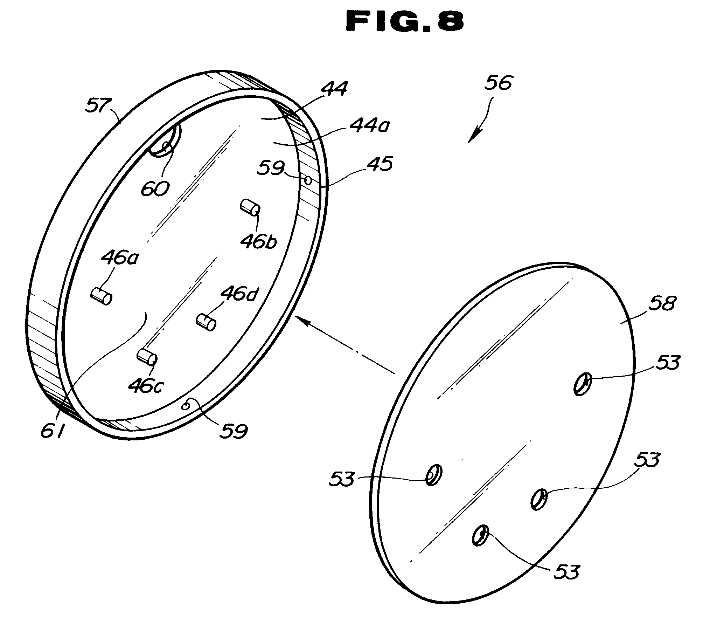

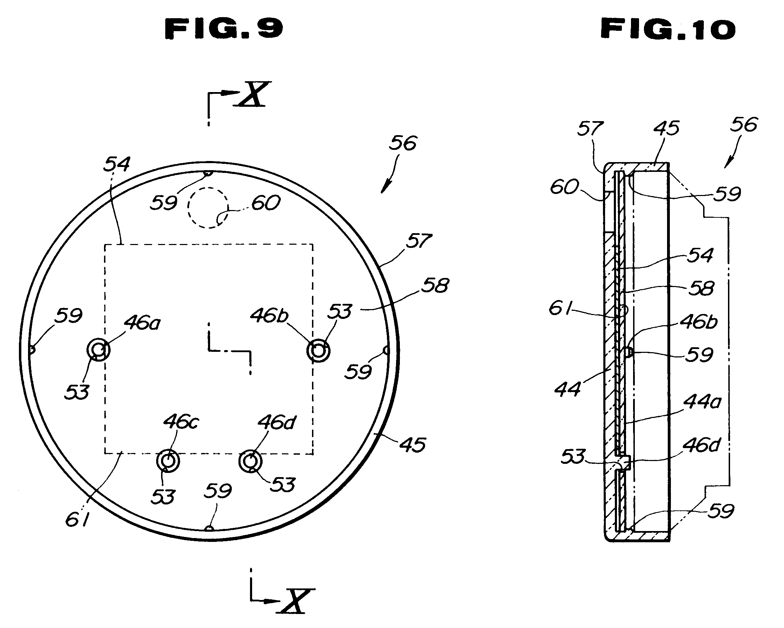

Figures 8 to 10 show a lens cap 56 according to a second embodiment of the invention.

The lens cap 56 includes a cap main body 57, formed of a transparent or semitransparent synthetic resin, and a paper press 58 removably attached to the cap main body 57.

Parts of the cap main body 57 and paper press 58 having the same structure or the same function as parts of the cap main body 42 or paper press 43 of the lens cap 41 of the first embodiment are designated by the same references as those used in the first embodiment and their descriptions will not be repeated.

Four engagement projections 59 each of substantially hemispherical shape are formed symmetrically on the inner surface of the fitting portion 45 of the cap main body 57 with respect to the centre of the main part 44 of the cap main body 57.

The paper press 58 is disc-shaped and is dimensioned so as to be capable of fitting tightly into the fitting portion 45 of the cap main body 57. When the paper press 58 is fitted to the cap main body 57 so as to overlie the inner surface 44a of the main part 44 of the cap main body 57, the engagement projections 59 are engaged with the outer peripheral edge of the paper press 58 whereby the paper press is grasped on the cap main body 57.

A hole 60 is formed through an upper end of the main part 44.

When the paper press 58 is attached to the cap main body 57 with the title recording paper 54 placed on a region 61 enclosed within the positioning projections 46a, 46b, 46c, and 46d of the main part 44 of the cap main body 57, the paper 54 is held on the lens cap 56 with the paper 54 being supported between the cap main body 57 and paper press 58.

To remove the title recording paper 54 from the lens cap 56, a fingertip of the operator is inserted from the front surface side into the hole 60 formed in the upper end of the main part 44 of the cap main body 57 to depress the upper end of the paper press 58. The paper press 58 is thereby disengaged from the engagement projections 59 at its peripheral edge. Therefore, the paper press 58 can be removed from the cap main body 57 and, subsequently, the title recording paper 54 can be removed from the cap main body 57.

The above-described lens caps are each removably attachable to a tip or free end portion of a photographic lens capable of photographing an object at a close distance and are provided with a region to which a title element can removably be attached. Therefore, the photographing of an arbitrary title can be carried out extremely easily.

In addition, since the lens cap in which an arbitrary title element is provided on the above-mentioned region is attached to the photographic lens, title photographing can be carried out without hanging the title recording paper on a wall or without holding the title recording paper on a larger-sized holding instrument. Since the title photographing is carried out with a fixed positional relationship between the title element and the photographic lens, the title photographing operation is not adversely affected by the occurrence of camera vibrations.

The lens caps embodying the invention enable the photographing of a title without using a special auxiliary instrument as described above, without selection of a special location for the photographing operation, and without being adversely affected by such vibrations as described above.

The invention is applicable to lens caps attachable to a photographic lens via a lens hood. However, the invention is also applicable to a lens cap removably attachable to a tip or end portion of photographic lens without the interposition of a lens hood. The invention is also applicable to lens caps for various types of camera photographic lenses.

## Claims

1. A lens cap (41, 56) comprising a lens cap body (42, 57) capable of removably covering a tip or end portion of a photographic lens (7) which is capable of photographing an object in a macro mode, on which lens cap body (42, 57) a title recording medium (54) made of a transparent or translucent material, on which a title is or can be marked, can be removably mounted, characterised by:
a plurality of positioning projections (46a - 46d) on the lens cap body (42, 57) between which the title recording medium (54) can be mounted to position the title recording medium (54) on a main part (44) of the lens cap body (42, 57), and a press plate (49, 58) made of a transparent material to hold the title recording medium (54) removably against the main part (44) of the lens cap body (42, 57) so that it can be photographed through the lens (7).

2. A lens cap according to claim 1, including a plurality of positioning members (46a-46d, 47, 59) on the lens cap body (42, 57) for supporting and positioning the press plate (49, 58) on a surface (44a) of the lens cap body (42, 57) facing the photographic lens (7).

3. A lens cap according to claim 2, wherein the said positioning members include at least one of said positioning projections (46a-46d) which is engageable with a hole (53) in the press plate (49, 58).

4. A lens cap according to claim 2, wherein the lens cap body (57) includes a hole (60) to assist removal of the fitted press plate (58).

## Patentansprüche

1. Objektivkappe (41,56), die einen Objektivkappenkörper (42,57) aufweist, der abnehmbar den Kopf- oder Endteil einer fotografischen Linse (7) bedeckt, die in der Lage ist, ein Objekt in einem Makromode zu fotografieren, wobei auf dem Objektivkappenkorper (42,57) ein Titelaufzeichnungsmittel (54) aus einem transparenten oder lichtdurchlässigen Material, das mit einem Titel beschriftet ist oder sein kann, abnehmbar befestigt sein kann, **gekennzeichnet durch** :
eine Vielzahl von Positionieransätzen (46a - 46d) auf dem Objektivkappenkorper (42,57), zwischen denen ein Titelaufzeichnungsmittel (54) befestigt werden kann, um das Titelaufzeichnungsmittel (54) auf einem Hauptteil (44) des Objektivkappenkörpers (42,57) zu befestigen, und eine Eindrückplatte (49,58) aus einem transparenten Material, um das Titelaufzeichnungsmittel (54) abnehmbar gegen den Hauptteil (44) des Objektivkappenkörpers (42,57) zu halten, sodaß es durch die Linse (7) fotografiert werden kann.

2. Objektivkappe nach Anspruch 1, die eine Vielzahl von Positioniergliedern (46a - 46d, 47, 59) auf dem Objektivkappenkörper (42,57) aufweist, zum Stützen und Positionieren der Eindrückplatte (49,58) auf einer Oberfläche (44a) des Objektivkappenkörpers (42,57), der auf die fotografische Linse (7) zeigt.

3. Objektivkappe nach Anspruch 2, worin die besagten Positionierungsglieder zumindest einen der besagten Positionierungsansätze (46a - 46d) beinhalten, der mit einem Loch (53) in der Eindrückplatte (49,58) zusammenwirkt.

4. Objektivkappe nach Anspruch 2, worin der Objektivkappenkörper (57) ein Loch (60) aufweist, um die Entfernung der befestigten Eindrückplatte (58) zu unterstützen.

## Revendications

1. Couvercle d'objectif (41, 56), comprenant un corps de couvercle d'objectif (42, 57) apte à recouvrir de manière amovible un bout, ou partie extrême, d'un objectif photographique (7) qui est apte à photographier un objet dans un mode macro, sur lequel corps de couvercle d'objectif (42, 57), un support d'enregistrement de titre (54) constitué d'une matière transparente ou translucide, sur lequel un titre est marqué ou peut être marqué, peut être monté de manière amovible, caractérisé par:
- une pluralité de saillies de positionnement (46a-46d) sur le corps de couvercle d'objectif (42, 57) entre lesqeulles le support d'enregistrement de titre (54) peut être monté pour positionner le support d'enregistrement de titre (54) sur une partie principale (44) du corps de couvercle d'objectif (42, 57), et une plaque presseuse (49, 58) constituée d'une matière transparente pour maintenir le support d'enregistrement de titre (54) de manière amovible contre la partie principale (44) du corps de couvercle d'objectif (42, 57) de manière qu'un objet puisse être photographié à travers l'objectif (7).

2. Couvercle d'objectif selon la revendication 1, comprenant une pluralité d'organes de positionnement (46a-46d, 47, 59) sur le corps de couvercle d'objectif (42, 57) pour supporter et positionner la plaque presseuse (49, 58) sur une surface (44a) du corps de couvercle d'objectif (42, 57) faisant face à l'objectif photographique (7).

3. Couvercle d'objectif selon la revendication 2, dans lequel lesdits organes de positionnement comprennent au moins une desdites saillies de positionnement (46a-46d) qui peut être engagée avec un trou (53) formé dans la plaque presseuse (49, 58).

4. Couvercle d'objectif selon la revendication 2, dans lequel le corps de couvercle d'objectif (57) comporte un trou (60) pour faciliter l'enlèvement de la plaque presseuse (58) montée.
